# EUROPÄISCHE PATENTANMELDUNG

(11) **EP 2 224 185 A1**
(43) Veröffentlichungstag der Anmeldung: **01.09.2010**
(21) Anmeldenummer: 09177951.2
(22) Anmeldetag: 03.12.2009
(51) Int. Cl.: F24J 2/52, H01L 31/042

(54) **Klemmverbindung (Formschluss)**

(30) Priorität: 05.12.2008 DE 102008044380; 01.07.2009 DE 102009026085; 14.07.2009 DE 102009026169; 10.06.2009 DE 102009025947
(71) Anmelder: Climasol-Solaranlagen GmbH, 89073 Ulm (DE)
(72) Erfinder: Lutz, Stefan, 89075 Ulm (DE)
(74) Vertreter: Lermer, Christoph

(57) **Zusammenfassung**

Ein Befestigungssystems (1) für Solarmodule weist ein Profil (20) auf, das direkt auf einem Dach oder einer sonstigen Unterkonstruktion befestigt werden kann. Das Profil (20) weist einen speziellen Querschnitt auf. Nach oben hin erstreckt sich ein Grundkörper (220), der im Wesentlichen eine Breite (a) aufweist. An der Oberseite geht das Profil in einen Kopfbereich (230) über, der zumindest an einer Stelle eine größere Breite (b) aufweist als der Grundkörper (220). Außerdem umfasst das System (1) einen Adapter (50) mit Schenkeln (510a,510b), die das Kopfteil (230) wenigstens teilweise umgreifen und eine formschlüssige Verbindung mit dem Profil (20) herstellen. Zwischen dem Profil (20) und dem Adapter (50) ist eine Folie (330) angeordnet.

## Beschreibung

### TECHNISCHES GEBIET

Die vorliegende Erfindung betrifft ein System zur Befestigung eines Solarmoduls, umfassend: ein Trägerelement zur Befestigung am Untergrund bzw. einer Unterkonstruktion; und eine Halterung, die am Trägerelement angeordnet ist.

### STAND DER TECHNIK

Der Einsatz von Solarmodulen zur Stromerzeugung hat im Angesicht steigender Energiepreise und knapper werdender nicht erneuerbarer Ressourcen an Bedeutung gewonnen. Um Solarmodule wirtschaftlich rentabel zu betreiben, wurden erhebliche Anstrengungen unternommen, die Rentabilität der Herstellung und den Wirkungsgrad der Module zu verbessern.

Für einen wirtschaftlichen Einsatz ist es jedoch erforderlich, dass Solarmodule mit möglichst geringem technischem Aufwand an geeigneten Stellen aufgebaut und dort effektiv genutzt werden können. Bekanntermaßen werden Solarmodule häufig an Dächern oder Unterkonstruktionen angebracht, so dass die Sonneneinstrahlung ungehindert auf die Solarzelle auftreffen kann.

Die meisten Montagesysteme bestehen aus mehreren Komponenten, die einerseits mit der Unterkonstruktion, andererseits untereinander verbunden werden müssen. So wird in der Regel ein Träger mit der Unterkonstruktion verschraubt. Anschließend werden Halterungen am Träger und daran die Solarmodule befestigt.

Der Aufwand bei der Montage ist bei den meisten Systemen nach wie vor beträchtlich. Insbesondere ist ein Abbau zum Austausch von Komponenten aufwändig. Änderungen des Aufbaus sind, wenn die Komponenten einmal aneinander befestigt sind, nur unter hohem Arbeitseinsatz möglich.

Außerdem ist jede Verletzung der Abdichtung des Dachs zu vermeiden. Durch herkömmliche Befestigungsmittel ist dies jedoch oft nur unzureichend möglich.

### AUFGABE DER ERFINDUNG

Ausgehend davon besteht die Aufgabe der vorliegenden Erfindung darin, ein System zur Befestigung von Solarmodulen vorzuschlagen, das eine einfache und zeitsparende Montage gewährleistet, wobei die Dachabdichtung möglichst wenig beeinträchtigt wird.

### TECHNISCHE LÖSUNG

Diese Aufgabe wird gelöst durch ein System zur Befestigung von Solarmodulen nach Anspruch 1. Vorteilhafte Ausführungsformen der Erfindung ergeben sich aus den Merkmalen der abhängigen Ansprüche.

Ein erfindungsgemäßes System zur Befestigung eines Solarmoduls, umfasst: ein Trägerelement zur Befestigung am Untergrund bzw. einer Unterkonstruktion; und eine Halterung, die am Trägerelement angeordnet ist, wobei die Halterung durch Formschluss mit dem Trägerelement verbunden ist.

Durch die formschlüssige Verbindung wird eine einfache und zeitsparende Montage gewährleistet und die Dachabdichtung möglichst wenig beeinträchtigt, da Durchdringungen und Öffnungen in der Abdichtung (beispielsweise einer Folie) im Verbindungsbereich zwischen dem Trägerelement und der Halterungen vermieden werden. Somit entstehen keine Undichtigkeiten. Foliendurchdringungen der Nieten oder Schrauben für die Befestigung der Befestigungsadapter oder Modulschiene werden vermieden.

Die Montage ist relativ einfach. Zunächst wird das Trägerprofil auf dem Flachdach, einer eingeschweißten Bohle, o.ä., verschraubt und dann selbst eingeschweißt. Danach wird der Befestigungsadapter (zweiteilig oder aus Federstahl) über das Trägerprofil aufgeklemmt. Mit Hilfe des Systems können Solarmodule an verschiedenen Konstruktionen, beispielsweise an Flachdächern, Schrägdächern, auf ebenem, geneigtem und/oder flachem Untergrund angebracht werden. Insgesamt wird der Montageaufwand sowohl bei der Montage als auch bei der Demontage der Modulhalterungen einer Modulschiene erheblich reduziert. Dies führt zu einer Zeitersparnis sowie Kostenreduzierung.

Gemäß den Richtlinien für Dächer sind Durchdringungen zu vermeiden, oder aber in einem ausreichenden Abstand über wasserführenden Ebene auszuführen, was sehr aufwändig und kostspielig ist.

Das Trägerelement ist daher so geformt, dass ein Klemmhalter sich alleine durch elastische und/oder Druckkräfte befestigen lässt. Durch diese Kraft wird eine sichere, formschlüssige Verbindung geschaffen, die ausreicht, um abhebenden Kräften entgegenzuwirken.

Das Trägerelement kann insbesondere einen Querschnitt aufweisen, der wenigstens eine Hinterschneidung und/oder Vertiefung zum Hintergreifen durch eine Haltekomponente der Halterung aufweist. Die Vertiefung kann eine Verengung des Querschnitts sein.

Die Halterung kann vorzugsweise wenigstens eine Haltekomponente aufweisen, die die Hinterschneidung und/oder Vertiefung des Trägerelements hintergreift. Die Haltekomponente kann eine Klammer sein, die zwei Schenkel aufweist. In der regel ist die Außenkontur des Trägerelements so an die Innenkontur der Halterung angepasst, dass diese passgenau miteinander verbunden werden können. Die Haltekomponente liegt flächig an einem oder mehreren Abschnitten des Kopfteils an. Zwischen dem Trägerelement und der Klammer kann eine Dichtfolie angeordnet sein.

Die Haltekomponente weist insbesondere wenigstens zwei Schenkel auf. Zwischen den freien Enden der Schenkel ist eine Öffnung ausgebildet, die erweitert werden kann, um die Klammer über das Trägerelement zu bringen. Anschließend wird die Öffnung verkleinert, um die Klammer am Trägerelement formschlüssig zu befestigen.

Die Schenkel können verbunden sein, und die freien Enden der Schenkel können elastisch auseinander biegbar ausgebildet sein. In diesem Fall wirkt eine elastische Rückstellkraft, die einer ausgeübten Kraft, die die freien Enden auseinander drückt, entgegen wirkt. Die Klammer kann beispielsweise aus Federstahl hergestellt sein.

Die Haltekomponente kann insbesondere einteilig ausgebildet sein.

In einer bevorzugten Ausführungsform kann die Haltekomponente zwei- oder mehrteilig ausgebildet sein.

Die Schenkel können vorzugsweise lösbar miteinander verbunden sein. Eine zweiteilige Halterung kann aus einem starren, nicht elastischen, oder weniger elastischen Material bestehen. Die Klammer kann z.B. aus Edelstahl hergestellt sein. Bei der Montage werden die Schenkel um das Kopfteil des Trägerelements gelegt, so dass sie das Kopfteil wenigstens teilweise umgreifen/hintergreifen, und anschließend am oberen Ende aneinander befestigt, z.B. durch Verschrauben.

Die Schenkel können mittels einer Schraube und/oder eines Bolzens lösbar miteinander verbunden sein.

Das Trägerelement kann wenigstens ein Fußteil und ein mit dem Fußteil verbundenes Kopfteil aufweisen, wobei der Übergangsbereich zwischen dem Fußteil und dem Kopfteil verengt ausgebildet ist. In der Regel wird das Kopfteil von oben her von der Halterung wenigstens teilweise umgriffen/hintergriffen, so dass eine formschlüssige Verbindung entsteht.

Das Trägerelement kann wenigstens ein Fußteil und ein mit dem Fußteil verbundenes Kopfteil aufweisen, wobei das Fußteil im Querschnitt wenigstens im Übergangsbereich zwischen dem Fußteil und dem Kopfteil eine geringere Breite aufweist als die maximale Breite des Kopfteils. Die freien Enden der Klammer greifen in die Verengung bzw. den schmaleren Querschnittsbereich ein.

In einer besonders bevorzugten Ausführungsform der Erfindung kann das Fußteil kegelstumpfförmig ausgebildet sein.

Das Kopfteil kann insbesondere einen im Wesentlichen kreisförmigen oder elliptischen Querschnitt aufweisen. Dadurch wird eine Verletzung bzw. Beschädigung der Dichtfolie an scharfen Kanten verhindert.

Das System weist insbesondere wenigstens einen Folienabschnitt auf, der über das Trägerelement geführt ist. Der Folienabschnitt kann das Trägerelement abdecken.

Der Folienabschnitt kann seitlich des Trägerelements mit dem Untergrund und/oder einer unter dem Trägerelement angeordneten Dachfolie wasserdicht verbunden sein. Der Folienabschnitt dient als Dichtelement.

Der Folienabschnitt kann insbesondere mittels wenigstens einer Schweißnaht mit dem Untergrund und/oder einer unter dem Trägerelement angeordneten Folie verbunden sein. Das Trägerelement ist somit auf der Dachfolie (oder einer sonstigen Unterlage) vom Folienabschnitt eingeschweißt.

Vorzugsweise ist der Folienabschnitt beidseitig des Trägerelements mittels jeweils wenigstens einer Schweißnaht mit dem Untergrund und/oder einer unter dem Trägerelement angeordneten Dachfolie verbunden.

Die Halterung kann einen Halter zur Verbindung eines Solarmoduls, einer Profilschiene und/oder eines Gleitschuhs mit dem Halter aufweisen.
mit den Vertiefungen des Trägerelements gebracht werden, so dass die Halterung nach oben hin vom Trägerelement abgenommen werden kann.

Die Halterung kann in einer besonders bevorzugten Ausführungsform der Erfindung einen Gleitschuh zur gleitenden Aufnahme eines Gleitelements aufweisen oder mit einem derartigen Gleitschuh verbunden sein.

Das System kann wenigstens ein Gleitelement aufweisen, das gleitend im Gleitschuh gelagert ist. Das Gleitelement kann Mittel zur Befestigung eines Solarmoduls am Gleitelement aufweisen.

Die formschlüssige Verbindung oder Rastverbindung ermöglicht außerdem ein Verschieben der Halterung entlang der Längserstreckungsrichtung (y) des Trägerelements. Auf diese Weise ist, auch nach dem Fixieren der Halterung gegenüber abhebenden Kräften, große Flexibilität bei der Positionierung der Halterung am Trägerelement gegeben.

Zum Lösen der Halterung vom Trägerelement werden die Schenkel nach Außen verspannt bzw. die Verbindung zwischen den Schenkeln gelöst, wobei die freien Enden außer Eingriff

### KURZE BESCHREIBUNG DER FIGUREN

Weitere Merkmale und Vorteile der Erfindung werden aus der nachfolgenden Beschreibung bevorzugter Ausführungsbeispiele anhand der Figuren deutlich. Es zeigen:
- Figur 1: eine perspektivische Ansicht eines erfindungsgemäßen Befestigungssystem;
- Figur 2: eine Draufsicht auf eine Solarmodulanordnung gemäß der Erfindung;
- Figur 3: die Anordnung eines erfindungsgemäßen Befestigungssystems an einem Schrägdach;
- Figur 4: eine Anordnung eines Solarmoduls mit Hilfe des erfindungsgemäßen Befestigungssystems;
- Figur 5: eine erste Aufnahme gemäß der Erfindung;
- Figur 6: eine zweite Aufnahme gemäß der Erfindung;
- Figur 7: eine seitliche Schnittansicht eines Befestigungssystems gemäß der Erfindung;
- Figur 8: eine seitliche Schnittansicht einer Modulschienenanordnung gemäß der Erfindung;
- Figur 9: eine Draufsicht auf die Modulschienenanordnung der Figur 7;
- Figur 10: eine Draufsicht auf eine Solarmodulanordnung gemäß der Erfindung;
- Figur 11: ein Beispiel für eine Modulschiene mit Modulklammern;
- Figur 12: eine detaillierte Ansicht einer erfindungsgemäßen Modulschiene und einer erfindungsgemäßen Modulklammer;
- Figur 13: eine weitere detaillierte Ansicht einer erfindungsgemäßen Modulschiene und einer erfindungsgemäßen Modulklammer;
- Figur 14: eine erfindungsgemäße Modulschiene mit einer daran befestigten erfindungsgemäßen Modulklammer;
- Figur 15: eine erste Ausführungsform eines erfindungsgemäßen Klammerprofils;
- Figur 16: das Klammerprofil aus der Figur 15 mit einem Klemmadapter;
- Figur 17: eine zweite Ausführungsform eines erfindungsgemäßen Klammerprofils;
- Figur 18: eine dritte Ausführungsform eines erfindungsgemäßen Klammerprofils;
- Figur 19: eine vierte Ausführungsform eines erfindungsgemäßen Klammerprofils;
- Figur 20: einen Aufbau mit dem erfindungsgemäßen Klammerprofil;
- Figur 21: eine weitere Ausführungsform eines erfindungsgemäßen Klammerprofils;
- Figur 22a: das Klammerprofil aus Figur 21 in einem ersten Verriegelungsmodus;
- Figur 22b: das Klammerprofil aus Figur 21 in einem zweiten Verriegelungsmodus;
- Figur 23: das Klammerprofil aus Figur 21 in einem weiteren Verriegelungsmodus; und
- Figur 24: eine weitere Ausführungsform eines erfindungsgemäßen Klammerprofils;
- Figur 25: das erfindungsgemäße Klammerprofil in verschiedenen Anwendungen; und
- Figur 26: ein Detail des erfindungsgemäßen Klammerprofils aus Figur 25.

### DETAILLIERTE BESCHREIBUNG BEVORZUGTER AUSFÜHRUNGSBEISPIELE

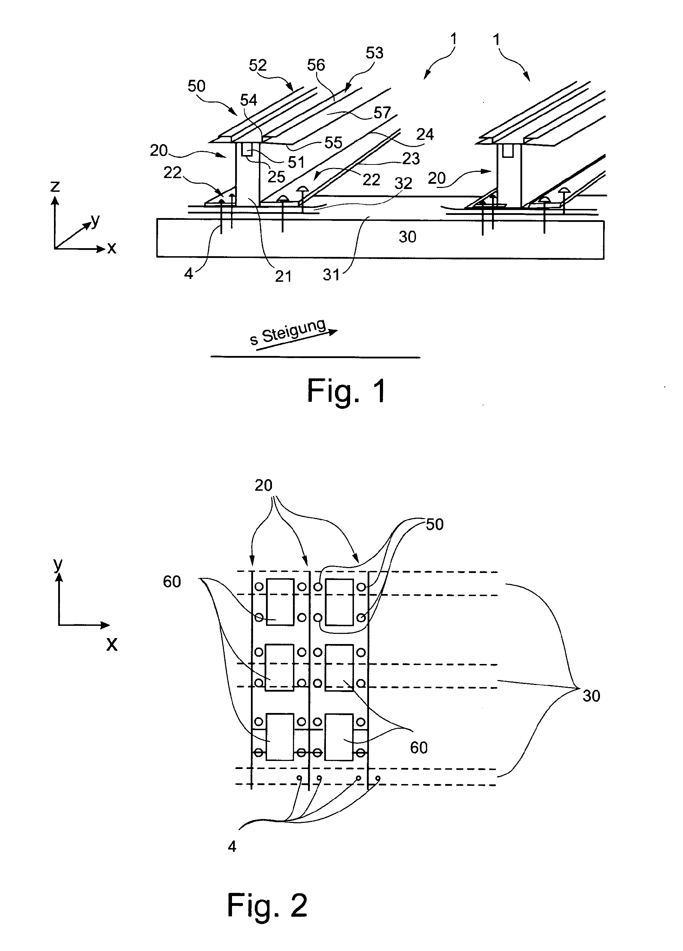

Die Figur 1 zeigt ein erstes Ausführungsbeispiel eines Befestigungssystems 1 gemäß der vorliegenden Erfindung.

Das Befestigungssystem 1 weist zwei (oder mehrere nicht dargestellte) parallel zueinander angeordnete Modulprofile 20 auf. Die Modulprofile 20 umfassen eine Profilschiene 21 und sich unten beidseitig seitlich (+/- x-Richtung) von der Profilschiene 21 erstreckende Flansche 22. Wenigstens einer der Flansche 22, in der Regel der an einem Schrägdach nach oben (in x-Richtung) ausgerichtete Flansch 22 kann derart ausgebildet sein, dass zwischen einer äußeren Erhöhung 23 und der Profilschiene 21 eine Wasserrinne 24 gebildet ist. Auf der Oberseite weist die Profilschiene 23 eine sich in y-Richtung erstreckende Vertiefung 25 auf.

Die Flansche 22 bzw. die Unterseite des Modulprofils 20 liegen auf einem Unterträger, beispielsweise einer Holzbohle 30, auf und sind mittels Befestigungsschrauben 4 an der Holzbohle 30 befestigt. Zwischen der Unterseite des Modulprofils 20 und der Holzbohle 30 kann eine Dachfolie 31 und evtl. eine zusätzliche Dichtung 32 zwischen der Dachfolie 31 und der Unterseite des Modulprofils 20 angeordnet sein. Die Holzbohle 30 kann in die Folie 31 eingeschweißt sein. Zwischen Modulprofil 20 und der Holzbohlenbefestigung kann optional noch eine weitere Dichtungsmanschette eingelegt sein. Ebenso können die Modulprofile 20 zusätzlich zur Befestigung mittels der Befestigungsschrauben 4 geklebt werden.

Das Befestigungssystem 1 weist zudem Aufnahmeelemente 50 auf, die an den Modulprofilen 20 angeordnet sind. Ein Aufnahmeelement 50 weist hierzu einen nach unten gerichteten Vorsprung 51 auf, der komplementär zur Vertiefung 25 des Modulprofils 20 ausgebildet und in diese einsteckbar ist. Die Vertiefung kann ein Gewinde umfassen. Statt des Vorsprungs kann eine Schraube vorgesehen und die Halterung 50 mit dem Modulprofil verschraubt werden.

Es können mehrere Aufnahmeelemente 50 parallel auf eine Profilschiene 21 aufgeclipst werden. Außerdem weist das Aufnahmeelement 50 beidseitig Aufnahmen 52, 53 auf, die jeweils eine Basis 54, einen unteren Schenkel 55 und einen oberen Schenkel 56 aufweisen, die einen Aufnahmeraum 57 zum Einbringen des Randsbereichs eines Solarmoduls (nicht dargestellt) ausbilden.

In der Figur 2 ist eine Draufsicht auf eine erfindungsgemäße Solarmodulanordnung dargestellt. Die Anordnung ist an einer in x-Richtung ansteigenden Konstruktion angeordnet. Die Anordnung weist mehrere parallel angeordnete Holzbohlen 30 auf, die entlang der x-Richtung ausgerichtet sind.

Senkrecht zu den Holzbohle 30 sind Modulprofile 20 entsprechend der Ausführungsform gemäß der Figur 1 in y-Richtung angeordnet. Die Modulprofile 20 sind durch Befestigungsmittel 4, beispielsweise durch Schrauben, jeweils beidseitig der Profilschienen 21 (vgl. Figur 1) an den Holzbohlen 30 befestigt. Die Modulprofile 20 sind durchgehend ausgebildet.

Zwischen den Modulprofilen 20 sind einzelne Solarmodule 60, beispielsweise Dünnschichtsolarmodule, an jeweils vier Aufnahmeelementen 50 befestigt. Jedes Aufnahmeelement 50 (vgl. Figur 1) kann dabei jeweils die Endkanten zweier in x-Richtung benachbart angeordneter Solarmodule 60 aufnehmen.

Aus der Figur 2 wird deutlich, dass die Breite (y-Richtung) der Aufnahmeelemente 50 klein ist gegenüber der Breite der durch die Aufnahmeelemente 50 gehaltenen Modulschienen 60. Auf diese Weise wird eine praktisch punktförmige Halterung jedes Solarmoduls 60 an vier (4) Stellen realisiert. Jedes der Module liegt an vier Punkten auf. Beispielsweise können die Aufnahmeelemente 50 eine Länge von nur wenigen cm haben, während die Solarmodule 60 eine Breite von ca. 1 Meter oder mehr aufweisen.

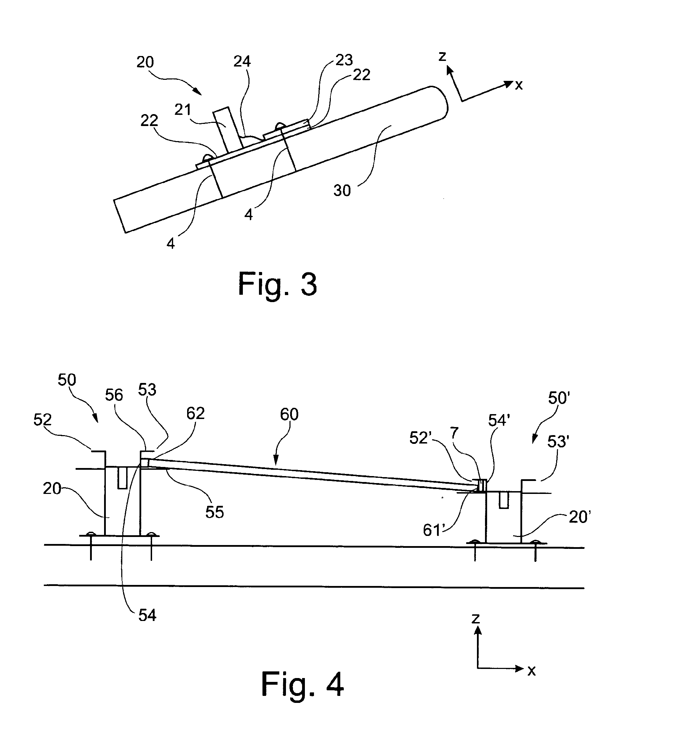

Die Figur 3 zeigt eine Anordnung eines Modulprofils 20 gemäß der Erfindung an einem geneigten Unterträger 30. Entsprechend der Figur 1 sind seitliche Flansche 22 des Modulprofils 20 mit Hilfe von Befestigungsmitteln 4 an der Holzbohle 30 befestigt. Zumindest der oben angeordnete der Seitenflansch 22 ist mit einer Erhöhung 23 versehen, die gemeinsam mit der Profilschiene 21 eine Wasserrinne 24 begrenzt. Die Wasserrinne 24 verhindert ein Eindringen von Wasser, insbesondere von Stauwasser, das sich durch Wasseranstauung an der Profiloberseite der Profilschiene 21 sammelt, zum Einschraubloch der Befestigungsschraube 4.

Die Figur 4 verdeutlicht das Einlegen eines Solarmoduls 60 zwischen zwei parallel angeordneten Modulprofile 20, 20'. Auf den Modulprofilen 20, 20' ist jeweils ein Aufnahmeelement 50, 50' befestigt. Jedes Aufnahmeelement 50, 50' weist eine erste obere Aufnahme 52, 52' und eine zweite untere Aufnahme 53, 53' auf. Wegen der Anordnung des Systems im vorliegenden Ausführungsbeispiel an einem Schrägdach mit einer Steigung in x-Richtung ist die erste Aufnahme 52', die dem höher gelegenen Modulprofil 20 zugeordnet ist, für das Solarmodul 60 eine obere Aufnahme 52' und die zweite, dem weiter unten angeordneten Modulprofil 20 zugeordnete Aufnahme 53, eine untere Aufnahme 53.

Zunächst wird die obere Kante 61 des Moduls 60 in die Aufnahmeöffnung 57' (vgl. auch Fig. 1) des oberen Profils 52' (bzw. in die Aufnahmeöffnungen mehrere oberer Aufnahmeelemente 50') eingesetzt und in Richtung der Basis 54' der Aufnahme 52' geschoben.

Anschließend wird die untere Kante 62 des Moduls 60 am freien Ende des oberen Schenkels 56 der unteren Aufnahme 53 vorbei bis zum unteren Schenkel 55 der unteren Aufnahme 53 geführt. Das System ist dabei durch eine Verkürzung des oberen Schenkels gegenüber dem unteren Schenkel der unteren Aufnahme 53 so ausgelegt, dass das Vorbeiführen der unteren Kante 62 des Moduls 60 möglich ist, wenn die obere Kante 61 des Moduls 60 in Richtung der Basis 54' der oberen Aufnahme 52' geschoben ist.

Anschließend wird der untere Randbereich des Moduls 60 zwischen den oberen Schenkel 56 und den unteren Schenkel 55 der unteren Aufnahme 53 eingeschoben bzw. bewegt sich durch die Schwerkraft in Richtung der Basis 54 der unteren Aufnahme 53, die einen Anschlag bildet.

Zur Arretierung wird in den frei gewordenen Raum zwischen der Oberkante 61 des Moduls 60 und der Basis 54' der oberen Aufnahme 52' eine Arretierung 7, beispielsweise ein Gummielement, eingeführt. Das Arretierelement 7 verriegelt das Modul 60 in dem Befestigungssystem 1 und verhindert insbesondere ein Abheben des Moduls 60 von den Modulprofilen 20, 20'. Dadurch ist das Modul 60 in den sich gegenüberliegenden Aufnahmen 53, 52' zweier benachbarter Aufnahmeelemente 50, 50' sicher fixiert.

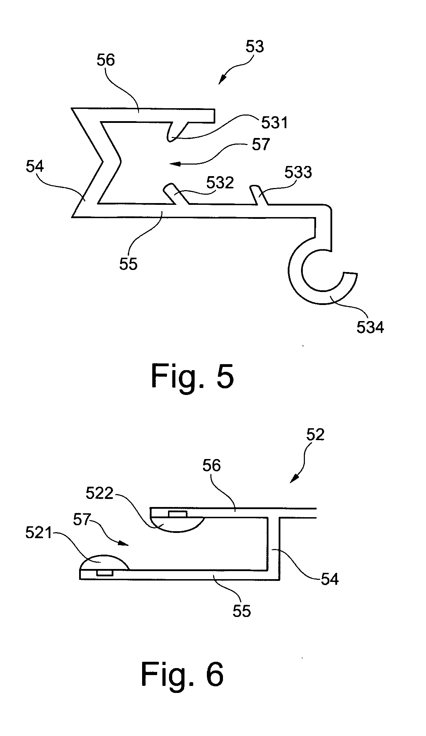

In der Figur 5 ist beispielhaft eine untere Aufnahme 53 eines Aufnahmeelements 50 dargestellt. Die untere Aufnahme 53 weist eine Basis 54, einen sich senkrecht davon erstreckenden unteren Schenkel 55 und einen sich senkrecht davon erstreckenden oberen Schenkel 56 auf. Diese Elemente begrenzen einen Aufnahmeraum 57 zur Aufnahme eines Randbereichs eines Solarmoduls.

Außerdem weist die Aufnahme 53 sich von den Schenkeln 55 und 56 in den Aufnahmeraum 57 erstreckende und schräg in Richtung der Basis 54 gerichtete, abgeklappte Zähne 531, 532 und 533 auf. Zudem ist eine Kabelschlaufe 534 vorgesehen, die als Kabelhalterung für die Modulkabel dient.

Die untere Aufnahme besteht im Wesentlichen aus einem U-Profil mit Kabelschlaufe. Die Kabelschlaufe sichert die definierte Kabelhalterung der Modulkabel und verhindert ein Scheuern der Kabel an scharfen Kanten und Profilen und den Kontakt mit der Dachfolie. Dadurch werden chemische Reaktionen zwischen den Kabeln und der Dachfolie verhindert.

Die Figur 6 zeigt eine obere Aufnahme 52 mit einer Basis 54, einem unteren Schenkel 55 und einem oberen Schenkel 56. Am freien Ende des unteren Schenkels 55 ist ein erster Kompressionsgummi 521 angeordnet, im Bereich des freien Endes des oberen Schenkels 56 ein zweiter Kompressionsgummi 522. Das Modul kann in einfacher Weise in den Bereich 57 zwischen den Schenkeln 55 und 56 eingeführt werden. Die obere Aufnahme 52 ist so konzipiert, dass das Solarmodul stets in Kontakt mit einem oberen Gummielement 522 und einem unteren Gummielement 521 steht.

Im Bereich des Anschlags der unteren und/oder der oberen Aufnahme 52, 53 können geeignete Auflageelemente oder Pufferelemente aus Gummi angeordnet werden, um eine Beschädigung der Kante des Solarmoduls zu verhindern.

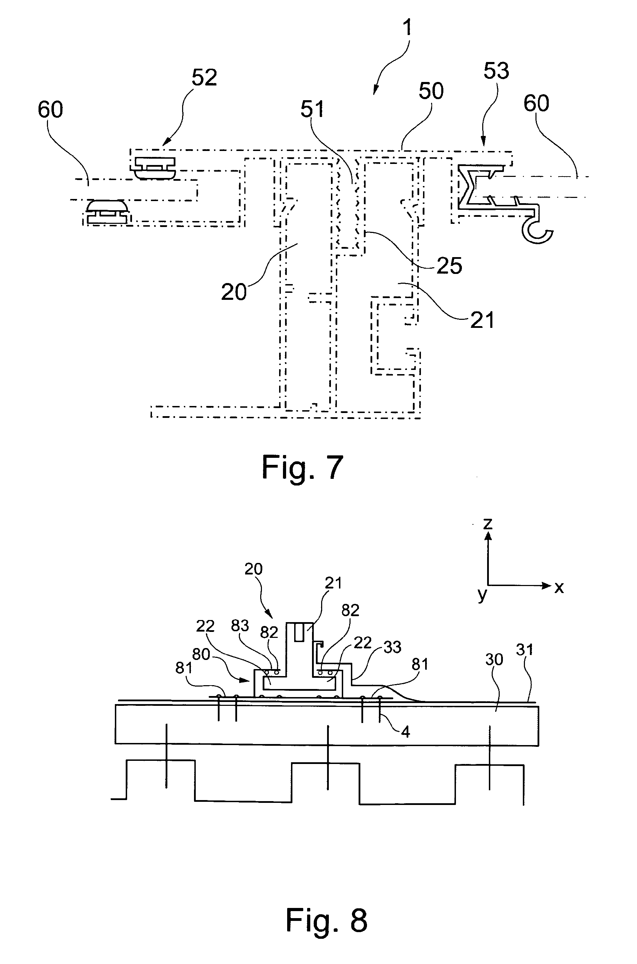

Die Figur 7 zeigt eine seitliche Schnittansicht eines erfindungsgemäßen Befestigungssystems 1 mit Aufnahmen 52 und 53 wie in den vorherigen Figuren 5 bzw. 6 beschrieben. Das Aufnahmeelement 50 ist auf die Profilschiene 21 des Modulprofils 20 aufgeclipst.

Die Figur 8 zeigt ein weiteres Ausführungsbeispiel eines erfindungsgemäßen Modulprofils 20. Dieses weist eine Profilschiene 21 auf, von deren unteren Ende sich senkrecht beidseitig Führungsflansche 22 erstrecken. Anders als bei den bisherigen Ausführungsbeispielen ist das Modulprofil 20 nicht über die Seitenflansche 22 direkt mit dem Unterträger 30 verbunden. Vielmehr weist das Befestigungssystem 1 einen Gleitschuh 80 auf, der die Seitenflansche 22 des Modulprofils 20 durch die Vorsprünge 83 klammerartig umgreift und das Modulprofil 20 so vor einem Abheben vom Gleitschuh 80 stabilisiert.

Der Gleitschuh 80 weist sich lateral beidseitig erstreckende Seitenflansche 81 auf, die mittels Befestigungsschrauben 4 an der Holzbohle 30 befestigt sind. Die Seitenflansche 81 liegen auf Folie 31 auf, die die Holzbohle 30 umschließt. Eine weitere Folie 33 kann sich über die Seitenflansche 81 erstrecken und so ein Eindringen von Feuchtigkeit in den Bereich der Befestigungsschrauben 4 verhindern.

Innerhalb des Gleitschuhs 80 sind Gleitführungen 82 angeordnet, die ein Gleiten des Modulprofils 20 in Längsrichtung (y-Richtung) der Modulschiene 23 ermöglichen. Die Modulschiene 23 kann sich somit kontrolliert in y-Richtung im Gleitschuh 80 bewegen. Die Modulprofile 20 werden an einem definierten Fixpunkt befestigt und können sich so einseitig oder zweiseitig relativ zum Fixpunkt ausdehnen. Die Gleitmechanik für Solarmodule dient zur kontrollierten Längenausdehnung bei Glaslaminaten, insbesondere bei Solarmodulen ohne Rahmen, und beim Einsatz relativ langer Modulschienen. Auf diese Weise wird verhindert, dass unkontrollierte Längenausdehnungen beispielsweise aufgrund von Temperaturschwankungen, in den Aufnahmen 52, 53 angeordnete Auflagegummis seitlich aus diesen herausschieben. Außerdem wird die Gefahr des Glasbruchs verhindert.

Im Rahmen der Montage kann der Gleitschuh 80 separat auf die Holzbohle 30 angeschraubt werden. Anschließend werden die Modulprofile 20 eingeführt. Die Modulprofile 20 können jedoch auch bereits vor der Montage des Gleitschuhs 80 in diesen eingeführt worden sein.

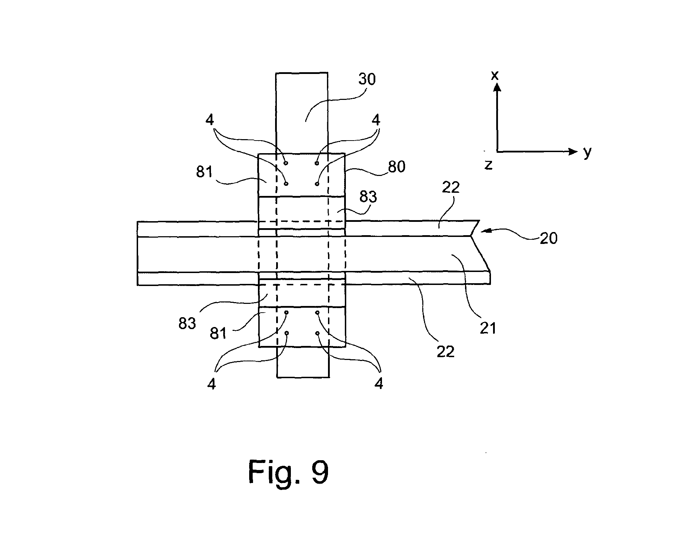

Die Figur 9 zeigt die Ausführungsform der Figur 8 in einer Draufsicht. Der Gleitschuh 80 befindet sich im Bereich einer Holzbohle 30 und ist mittels Befestigungsschrauben 4 über die beiden Seitenflansche 81 beidseitig mit der Holzbohle 30 verschraubt.

Im Gleitschuh 80 ist ein Modulprofil 20 mit einer Profilschiene 21 und Seitenflanschen 22 in y-Richtung bewegbar angeordnet. Ein Abheben des Modulprofils 20 wird durch ein Übergreifen der Seitenflansche 22 durch Vorsprünge 83 des Gleitschuhs 80 verhindert, während das obere Ende der Modulschiene 23 aus der zwischen den Enden der Haltevorsprünge 83 begrenzten Öffnung herausragt.

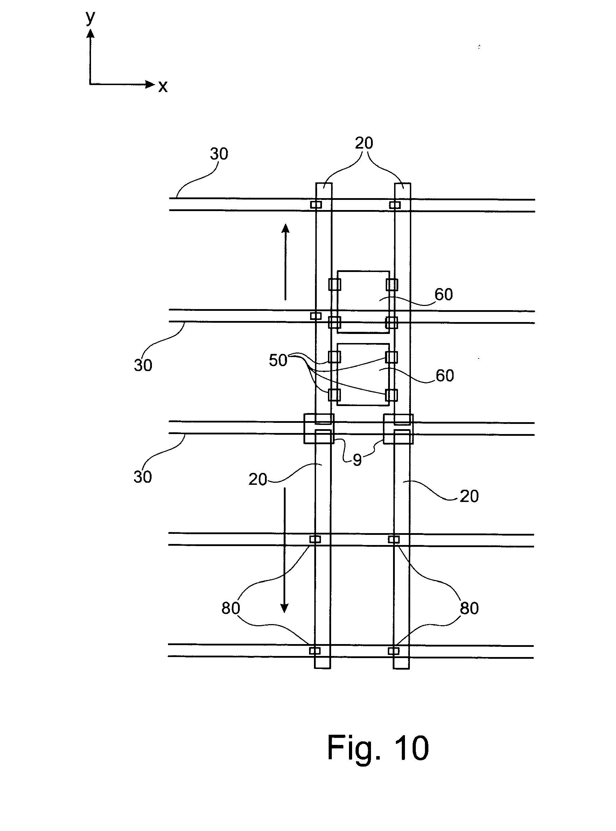

In der Figur 10 ist eine erfindungsgemäße Modulanordnung dargestellt. Die Module 60 sind mit jeweils vier Aufnahmeelementen 50 pro Modul an parallel zueinander angeordneten Modulprofilen 20 befestigt. Die Modulprofile 20 sind senkrecht zu parallel zueinander angeordneten Bohlen 30 ausgerichtet.

Zur bewegbaren Halterung der Modulprofile 20 sind jeweils Aufnahmeelemente 50, wie in den Figuren 8 und 9 dargestellt, vorgesehen. Im dargestellten Ausführungsbeispiel sind die Modulprofile 20 an Fixpunkten 9 fest angeordnet, so dass sie sich in einer Richtung vom Fixpunkt aus ausdehnen können.

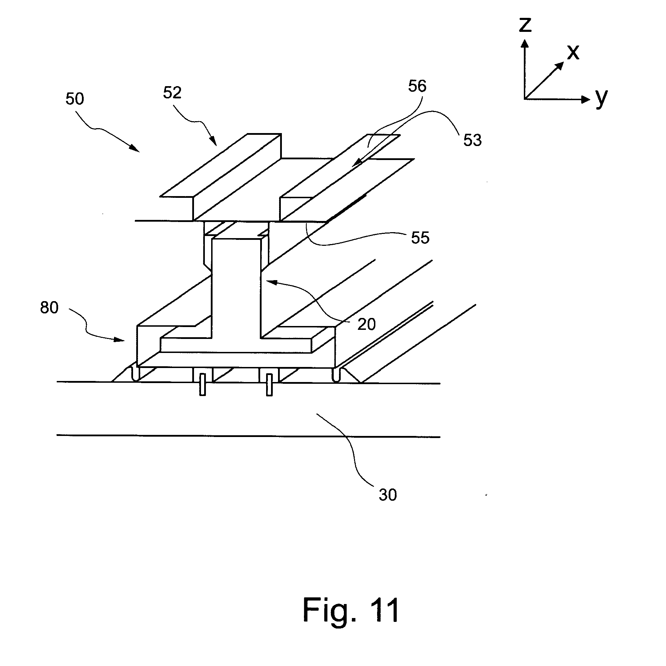

In der Figur 11 ist ein Beispiel für einen Gleitschuh 80 mit einer daran angeordneten Modulschiene 20 dargestellt. An der Modulschiene 20 sind Modulhalterungen 50 aufgeclipst. Wahlweise können die Klammern 50 zusätzlich verschraubt werden. Die Modulhalterungen 50 können jedoch, insbesondere ohne zusätzliche Befestigung, einfach angebracht und entlang der Längsachse der Modulschiene 20 in den Clipsrillen verschoben werden. Dadurch wird Montagezeit eingespart.

Die Solarmodule werden in den Zwischenraum zwischen den Schenkeln 55 und 56 der Modulklammer 52 oder 53 eingeführt und in y-Richtung fixiert, so dass sie fest in der Klammer 52 bzw. 53 gehalten werden. Der Modulclip 52 bzw. 53 kann eine nur kurze Länge (x-Richtung) von ca. 80 mm aufweisen, so dass zwei oder mehrere Modulclips 50, die entlang der Modulschiene 40 angeordnet sind, eine Kante eines Solarmoduls praktisch in Form punktförmiger Auflagen halten. Dadurch wird ein Entlüften der warmen Luft, die sich unter den Solarmodulen staut, nach außen ermöglicht.

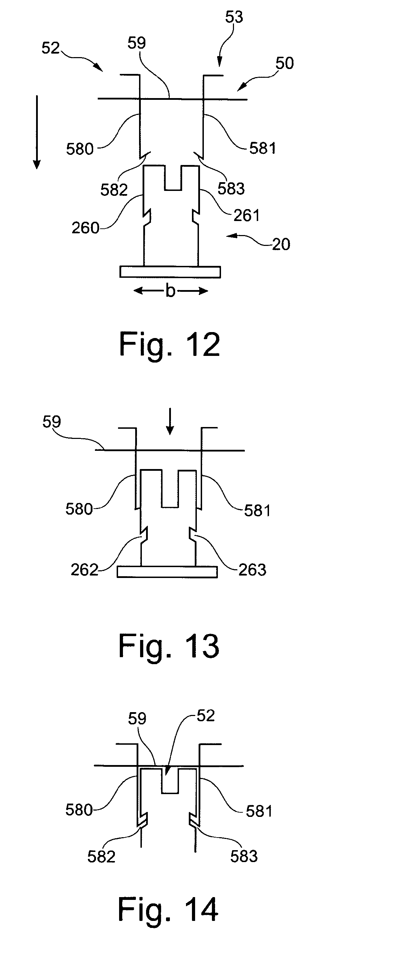

Die Figur 12 zeigt eine detaillierte Ansicht einer erfindungsgemäßen Modulschiene 20 und einer Modulhalterung 50. Die Modulhalterung 50 weist beidseitig Modulklammern 52 und 53 auf.

Außerdem weist die Modulhalterung zwei Schenkel 580, 581 auf, die sich von einer Basis 59 senkrecht nach unten erstrecken. Die Schenkel 580, 581 sind beabstandet zueinander angeordnet. Der Abstand entspricht im Wesentlichen der Breite b der Modulschiene 20. Die Schenkel 580, 581 sind bis zu einem gewissen Grad elastisch ausgebildet, so dass die nach Innen vorstehenden Nasen 582, 583, wie in der Figur 13 dargestellt, bei Ausübung eines Drucks von oben auf die Basis 59 entlang der Seitewände 260, 261 der Modulschiene 20 über die Modulschiene geführt werden können.

In den Seitenwänden 260, 261 der Modulschiene 20 sind Vertiefungen 262, 263 ausgebildet, in die die Nasen 582, 583 der Modulhalterung 50 eingreifen können. Der Eingriff erfolgt dabei, wie in der Figur 14 dargestellt, durch die elastische Rückstellkraft der Schenkel 580, 581. Die Modulhalterung 50 ist in diesem Fall in die Modulschiene 20 eingeclipst bzw. eingerastet. Die Nasen 582, 583 können als schräg zur Basis 59 gerichtete Widerhaken ausgebildet sein, die in entsprechende, komplementär dazu ausgebildete Öffnungen 262, 263 eingreifen. Die Modulhalterung 50 kann somit nur durch ein seitliches Herausdrücken wenigstens eines der Schenkel 580, 581 entrastet und abgenommen werden.

Die Öffnungen 262, 263 der Modulschiene 20 können abschnittsweise oder entlang der gesamten Modulschiene 20 als Rille ausgebildet sein. So kann die Modulhalterung 50 auch im eingeclipsten bzw. eingerasteten Zustand entlang der Längsrichtung der Modulschiene verschoben werden.

Um einen äußerst sicheren Halt der Module, beispielsweise am Dachrandbereich, an dem große Sogkräfte auftreten, zu gewährleisten, kann die Modulhalterung 50 zusätzlich kraftschlüssig mit der Modulschiene 20 verbunden werden, beispielsweise durch eine Schraubverbindung. Die Schraube wird durch eine Öffnung (nicht dargestellt) in der Basis 59 hindurch in eine mit Schraubrillen, einem Schraubengewinde, o. ä. versehenen Schraubkanal (Vertiefung 52) eingeschraubt. Auf diese Weise wird eine besonders sichere Verbindung zwischen der Modulschiene 20 und der Modulhalterung 50 hergestellt.

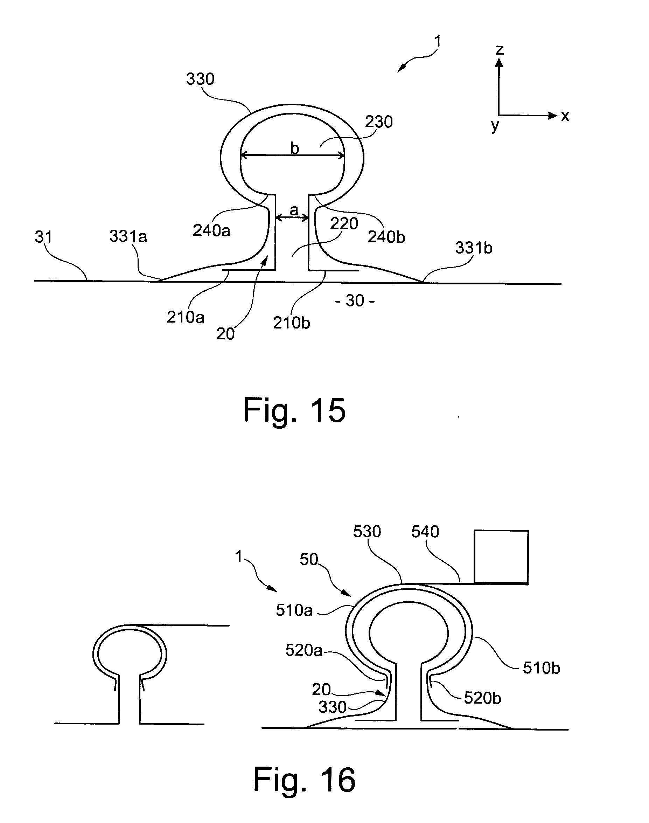

Die Figur 15 zeigt eine Ausführungsform eines weiteren erfindungsgemäßen Befestigungssystems 1 für Solarmodule. Ein Profil 20, das direkt auf einem Dach oder einer sonstigen Unterkonstruktion befestigt werden kann, liegt beispielsweise einer Bohle 30 oder direkt auf einer Dachfolie auf.

Das Profil 20 weist einen speziellen Querschnitt auf. An der Unterseite erstrecken sich seitlich beidseitig in x-Richtung Auflageflansche 210a, 210b. In diesen können Bohrungen (nicht dargestellt) vorgesehen sein, durch die Schrauben (nicht dargestellt) zur Befestigung des Profils 20 an der Unterkonstruktion 30 vorgesehen sind. Nach oben hin (in z-Richtung) erstreckt sich ein Grundkörper 220, der im Wesentlichen eine Breite a aufweist. An der Oberseite geht das Profil in einen Kopfbereich 230 über, der zumindest an einer Stelle eine größere Breite b (in x-Richtung) aufweist als der Grundkörper 220. Der Kopfbereich 230 kann in etwa einen kreisförmigen Querschnitt haben. Der Gesamtquerschnitt des Profils 20 (bzw. des Grundkörper 220 und des Kopfbereichs) kann insgesamt als pilzförmig bezeichnet werden. Der Kopfbereich 230 weist in diesem Ausführungsbeispiel beidseitig Hinterschneidungen 240a, 240b auf. Die Hinterschneidungen weisen jeweils nach unten weisenden Halteflächen 240a, 240b auf.

In diesem Aufbau 1 ist außerdem eine Folie 330 vorgesehen, die seitlich der Befestigungsflansche 210a, 210b des Profils 20 mit der Dachfolie 31 über Schweißnähte 331a, 331b wasserdicht verschweißt ist. Die Folie 330 ist über das Profil 20 geführt, um dieses vollständig und wasserdicht einzuhüllen.

Neben dem Profil 20 weist das System 1, wie in der Figur 16 dargestellt, einen Klemmadapter 50 auf. Dieser ist als Klammer ausgebildet, die um den Kopfbereich 230 des Profils 20 geklemmt werden kann. Der Klemmadapter 50 weist dazu beidseitig jeweils einen Schenkel 510a, 510b auf. Die Schenkel 510a, 510b bilden eine Klammer, die um den Kopfbereich 230 gelegt und formschlüssig mit diesem verbunden werden kann. Die Schenkel 510a, 510b umgreifen das Kopfteil 230 wenigstens teilweise und stellen eine formschlüssige Verbindung mit dem Profil 20 her. Zwischen dem Profil 20 und dem Adapter 50 ist eine Folie 330 angeordnet bzw. eingeklemmt.

Am Scheitel 530 der Klammer ist eine Halterung 540 zum Befestigen von Solarmodulen angeordnet. Die Solarmodule können direkt an der Halterung 540 befestigt werden. Es können jedoch auch weitere Verbindungen vorgesehen sein, beispielsweise ein Gleitschuh oder eine Zwischenverbindung, über die die Solarmodule mittelbar am Adapter 50 angeordnet sind.

Die Klammer bzw. der Adapter 50 kann einteilig ausgebildet und mittels zum Profil 20 hin wirkender elastischer Kräfte mit diesem verbunden sein. Die Klammer wird durch elastische Kräfte bzw. Druckkräfte am Profil 20 gehalten. Die unteren Enden 520a, 520b der Klammer können zum Anbringen und Entfernen des Klemmadapters 50 auseinender gebogen werden. Die Klammer kann beispielsweise aus Federstahl (z.B. V2A) hergestellt sein.

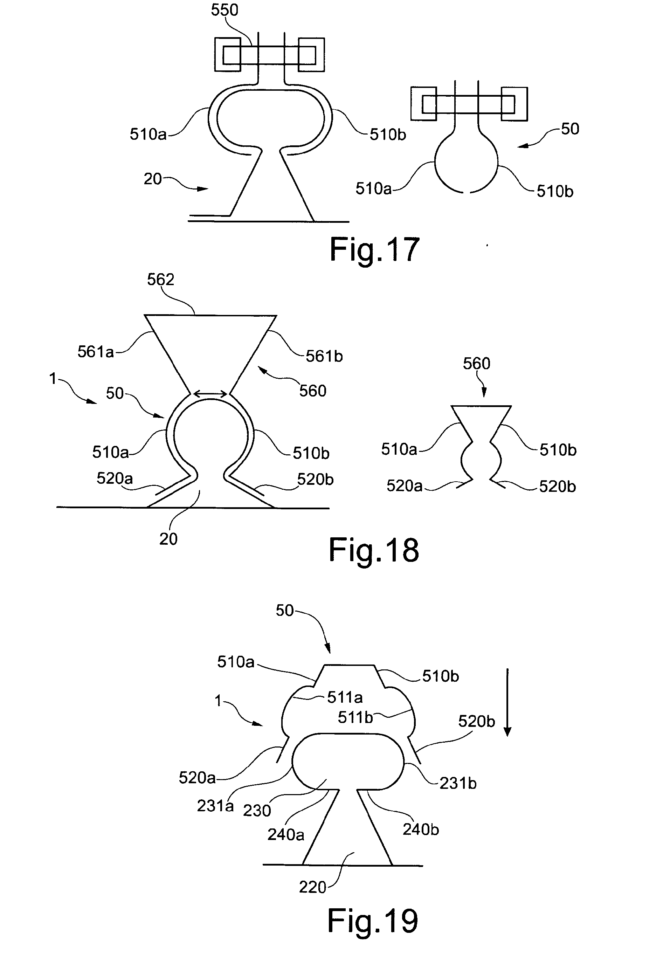

Die Klammer kann jedoch, wie in der Figur 17 dargestellt, auch zweiteilig ausgebildet sein. Die Schenkel 510a und 510b können als separate Bauteile bereitgestellt werden. Sie bestehen beispielsweise aus Stahl und sind lösbar miteinander verbunden. Als Verbindungselement 550 kann beispielsweise ein Bolzen, eine Schraube, etc. verwendet werden. Die Verbindung 550 der Schenkel 510a, 510b kann zum Anbringen und Entfernen des Klemmadapters 50 gelöst werden.

Auf der linken Seite der Figur 17 ist der Adapter 50 am Profil 20 angeordnet, auf der rechten Seite ist der Adapter 50 ohne Profil dargestellt.

Die Figur 18 zeigt ein weiteres Beispiel eines einteiligen Adapters 50. Die Schenkel 510a und 510b sind über eine Komponente 560 miteinander verbunden. Die Komponente 560 verbindet die Schenkel 510a und 510b über zwei seitliche Stege 561a, 561b und einem Brückenteil 562, das die oberen Enden der Stege 561a, 561b verbindet. Die Endbereiche 520a, 520b der Schenkel 510a bzw. 510b ragen schräg vom Profil 20 weg (nach außen) und nach unten.

Die Figur 19 zeigt ein weiteres Ausführungsbeispiel für ein erfindungsgemäßes Befestigungssystem 1.

Das Profil 20 weist einen Querschnitt mit einem Fußteil 220 auf, das sich nach oben hin (z-Richtung) verjüngt. Das Fußteil 220 hat einen im Wesentlichen kegelstumpfförmigen Querschnitt. An die Oberseite des Kegelstumpfs 220 schließt sich das Kopfteil 230 an, das beidseitig seitliche Ausbuchtungen/Vorsprünge 231a, 231b aufweist. Zwischen der Unterseite der seitlichen Ausbuchtungen 231a und 231b sind zwischen dem Fußteil 220 und dem Kopfteil 230 beidseitig Hinterschneidungen bzw. Vertiefungen 240a bzw. 240b gebildet.

Der Adapter 50 weist Schenkel 510a, 510b auf, die komplementär zum äußeren Querschnitt geformt sind. Die Schenkel 510a, 510b weisen jeweils untere Endbereiche auf, die sich entsprechend dem kegelstumpfförmigen Querschnitt des Fußteils 220 an dieses anlegen. Außerdem sind in den Schenkeln 510a, 510b Vertiefungen 511a, 511b vorgesehen, die komplementär zur Form der Ausbuchtungen 231a, 231b ausgebildet sind, um einen festen und sicheren Eingriff der Ausbuchtungen 231a, 231b in die Vertiefungen 511a bzw. 511b zu gewährleisten. Auf diese Weise wird eine sichere formschlüssige Verbindung ermöglicht.

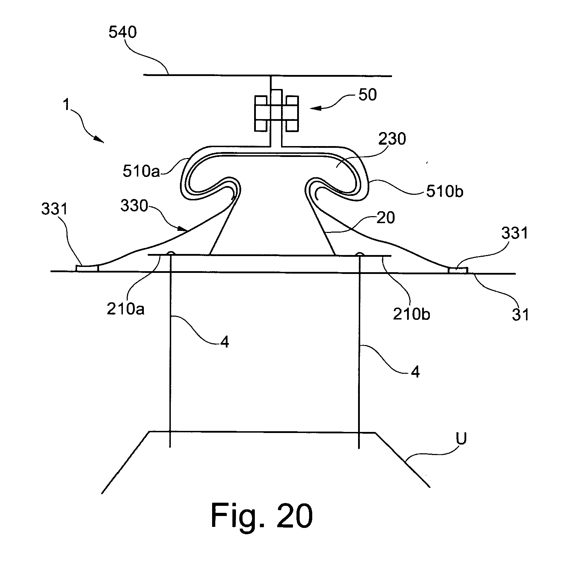

In der Figur 20 ist ein Aufbau mit einem weiteren Klammerprofil dargestellt. Das Befestigungssystem 1 weist ein Profil 20 auf, das mittels Befestigungsschrauben 4 an der Unterkonstruktion U eines Flachdachs befestigt ist. Die zum Durchgriff der Schrauben 4 sind in den Seitenflanschen 210a, 210b des Profils 20 Bohrungen vorgesehen. Die Folie 31 wird von den Schrauben 4 durchdrungen.

Das Profil 20 liegt mit seiner Unterseite auf der Dachfolie 31 auf. Um ein Eindringen von Feuchtigkeit in die Öffnungen zu verhindern wird das Profil 20 von einer weiteren Folie 330 umgeben. Die äußere Oberfläche des Profils 20 (abgesehen von der Unterseite) ist somit von der Folie 330 abgedeckt. Die Folie 330 ist seitlich des Profils 20 mit der Dachfolie 31 verschweißt.

Über die Folie 330 wird ein zweiteiliger Adapter 50 geklemmt. Die Schenkel 510a und 510b hintergreifen das Kopfteil 530 des Profils 20 und bilden somit eine formschlüssige Verbindung zwischen dem Profil 20 und dem Adapter 50.

Der Adapter weist einen Halter 540 auf, an dem ein Solarmodul, ein Gleitschuh, eine Modulschiene oder ein sonstiges Verbindungselement befestigt werden kann.

Durch die formschlüssige Verbindung zwischen dem Profil 20 und dem Adapter 50 wird die Folie 330 nicht verletzt oder durchbrochen. Eine Durchdringung der Folie 330 beispielsweise durch Schrauben/Nieten ist nicht erforderlich. Somit ist die Gefahr, dass Undichtigkeiten entstehen, reduziert.

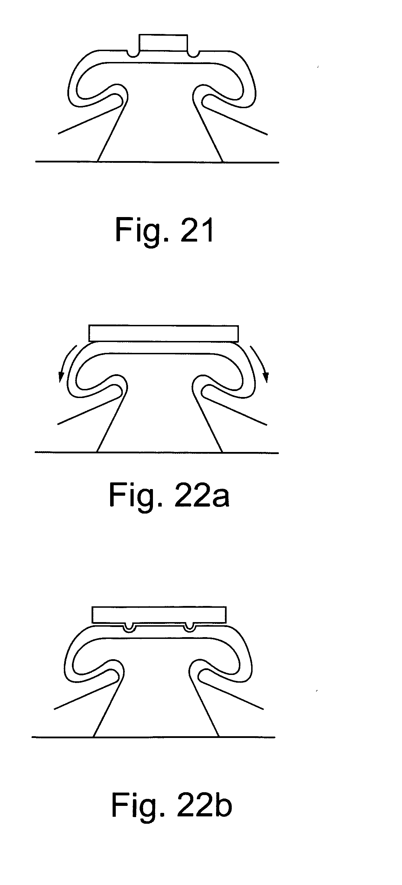

Die Figur 21 zeigt eine weitere Ausführungsform eines erfindungsgemäßen Klemmprofils, das sicher gegenüber abhebenden Kräften an einem Aluminiumprofil befestigt ist. Zwischen dem Klemmprofil und dem Aluminiumprofil kann, wie vorher beschrieben, eine Folie angeordnet sein, die das Aluminiumprofil abdeckt und seitlich davon mit der Dachfolie wasserdicht verschweißt ist.

Das elastische Klemmprofil (z.B. aus Edelstahl) weist in diesem Ausführungsbeispiel zwei Schenkel auf, die über einen Verbindungsabschnitt miteinander verbunden sind. Somit weist das Klemmprofil im Wesentlichen die Form einer Klammer auf. Im Verbindungsabschnitt sind zwei (können aber auch nur einer oder mehrere) sich nach unten erstreckende Knickbiegungen vorgesehen. Das Auseinanderbiegen der Schenkel erfolgt in erster Linie durch ein elastisches Verbiegen im Bereich der Knickbiegungen. Wird nun ein Adapter oder Modulprofil auf dem Verbindungsabschnitt angeordnet, wobei der Adapter bzw. das Modulprofil über die erhöhten äußeren Bögen des Verbindungsabschnitts ragen (nicht dargestellt), so können sich die beiden Schenkel nicht mehr öffnen, da sich die Bögen des Verbindungsabschnitts nicht über die Ebene der Unterseite des Adapters bzw. Modulprofils hinaus bewegen lassen können und somit ein Verbiegen des Verbindungsabschnitts in den Knickbiegungen blockiert wäre.

Durch das Anbringen eines Adapters oder einer Modulschiene auf dem Verbindungsabschnitt können in einer anderen Ausführungsform die Schenkel noch weiter nach außen gedrückt werden (vgl. Figur 22a). Außerdem werden die Knickbiegungen blockiert, so dass ein Öffnen der Klammer wesentlich erschwert wird.

Die Figur 22b zeigt das Klammerprofil aus Figur 21 in einem zweiten Verriegelungsmodus. Hier erfolgt die Verriegelung dadurch, dass das Modulprofil eine zu den Knickbiegungen komplementäre Unterseitenstruktur aufweist, so dass zu den Knickbiegungen komplementäre Vorsprünge in die Knickbiegungen eingreifen. Dadurch wird ein Öffnen der Klammer erschwert und somit die Zugkraft, die die Klammer aufnehmen kann, erhöht.

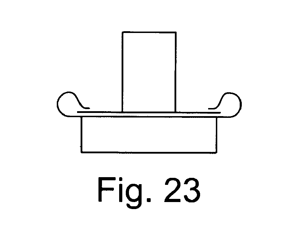

Jede andere Art und Weise, durch die das Öffnen der Klammer durch das Anbringen eines Adapters oder einer Modulschiene erschwert wird, kann im Rahmen dieser Erfindung eingesetzt werden. Die Figur 23 zeigt eine Modulschiene in einer Klammer, wobei die Modulschiene mit seitlichen Flanschen ausgestattet ist. Diese greifen nach einer Verformung des Verbindungsteils formschlüssig in die Knickbiegungen ein und sind somit an der Klammer befestigt.

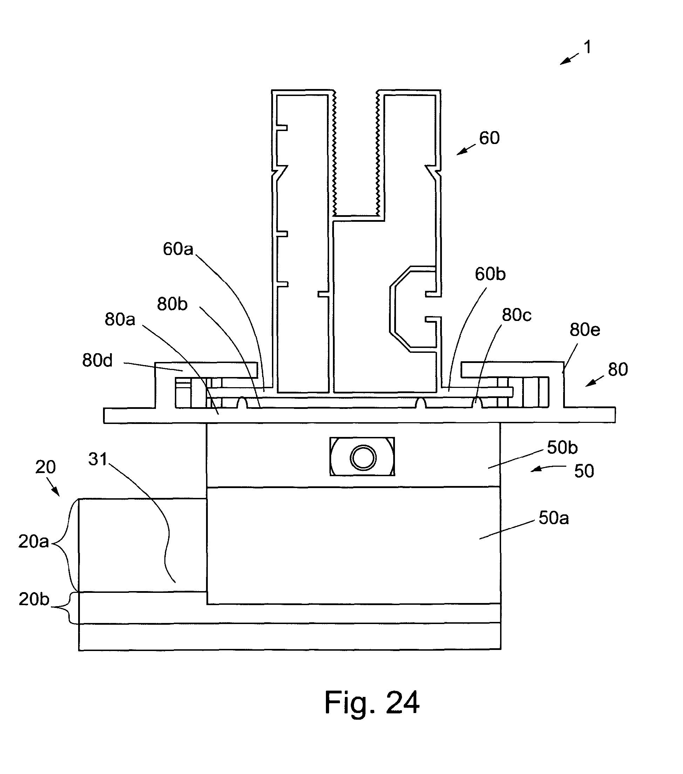

Die Figur 24 zeigt eine weitere Ausführungsform eines Montagesystems 1 gemäß der Erfindung mit einer erfindungsgemäßen formschlüssig an einem Befestigungsprofil 20 befestigten Halterung 50.

Das Montagesystem 1 umfasst ein Befestigungsprofil 20, das unterhalb einer Dachfolie 31 liegt und von dieser umschlossen wird. Das Befestigungsprofil 20 ist so ausgebildet, dass ein oberer Bereich 20a gegenüber einem Zwischenbereich 20b entlang der Längsrichtung L so aufgeweitet ist, dass eine Klammer formschlüssig am Profil 20 befestigt werden kann.

In dieser Ausführungsform weist das Montagesystem 1 eine Gleitschuhkonstruktion 50, 80 auf, die im Wesentlichen aus der Halterung 50 mit einer Klammer 50a, einem Zwischenbereich 50b und dem eigentlichen Gleitschuh 80 besteht. Die Klammer 50a ist an den oberen Bereich 20a des Befestigungsprofils 20 angeklammert, d.h. formschlüssig mit diesem verbunden. Somit bleibt die Dachfolie 31 unbeschädigt. Der Zwischenbereich 50b verbindet die Klammer 50a mit dem Gleitschuh 80. Im Gleitschuh 80 ist eine Modulschiene 60 aufgenommen, die senkrecht zur Zeichenebene bewegbar angeordnet ist.

Der Gleitschuh 80 weist einen Grundkörper 80a mit einer Oberseite 80b auf. Die Oberseite 80b des Grundkörpers 80a ist profiliert mit Erhöhungen 80c zur Auflage der Modulschiene 60 ausgebildet. Außerdem weist der der Gleitschuh 80 an den Seiten des Grundkörpers 80a angeordnete Halteklammer 80d und 80e auf, die das Modulprofil 60 festhalten, indem sie beidseitig jeweils einen Flansch 60a, 60b des Modulprofils 60 umklammern, so dass das Modulprofil 60 nur in einer Richtung bewegt werden kann.

Durch den Einsatz der Gleitschuhkonstruktion können Schwankungen in der Ausdehnung der einzelnen Komponenten des Montagesystems und der Solarmodule ausgeglichen werden.

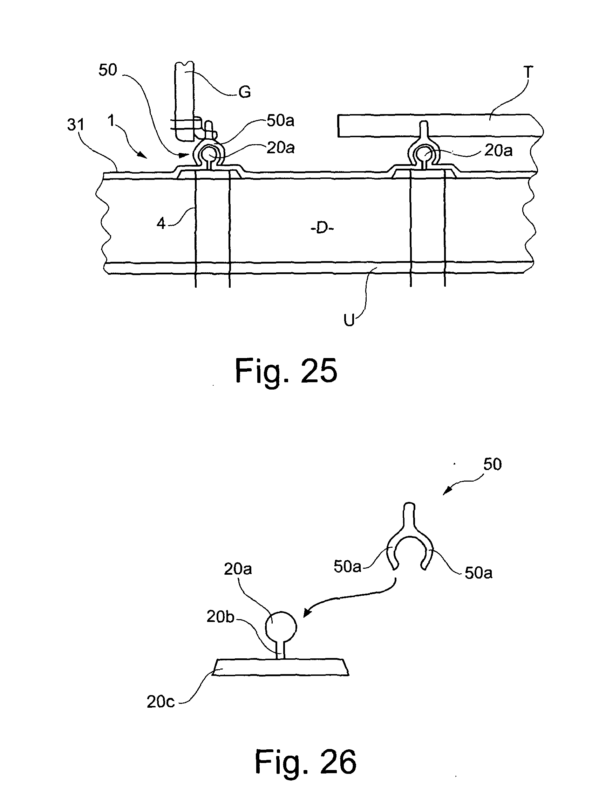

Die Figur 25 zeigt eine weitere Ausführungsform eines Montagesystems 1 gemäß der Erfindung, wobei Befestigungsprofile 20 über Befestigungsschrauben 4 mit dem Unterboden U einer Dachkonstruktion direkt verbunden sind. Die Befestigungsschrauben 4 ragen von einem Auflageflansch 20c (vgl. Fig. 26) durch eine Dämmschicht D der Dachkonstruktion hindurch zum Unterboden U und sind dort befestigt. Hierzu sind im Auflageflansch 20c Bohrlöcher zur Aufnahme der Befestigungsschrauben 4 ausgebildet. Eine Dachfolie 31 ist über die Befestigungsprofile 20 geführt und deckt diese vollständig ab.

Die Befestigungsprofile 20 sind zur formschlüssigen Befestigung der Halterungen 50 ausgebildet. Der Befestigungsabschnitt 20a der Befestigungsprofile 20 weist einen in etwa kreisförmigen Querschnitt mit im Bereich des Befestigungsabschnitts 20a vorgesehenen Hinterschneidungen auf. Der schmale Steg 20b (Verbindungselement) verbindet den Befestigungsabschnitt 20a mit dem Auflageflansch 20c, der eine flächige untere Auflagefläche aufweist. Der Auflageflansch 20c liegt mit der flächigen, nach unten gerichteten Auflagefläche auf der Dämmschicht D auf.

Die Halterung 50 ist durch Umgreifen des Befestigungsabschnitts 20a durch die Klammerpaare 50a mit dem Profil 20 verbunden. Zwischen dem Profil 20 und der Halterung 50 ist die Dachfolie 31 angeordnet. Diese wird weder beim Anbringen noch beim Lösen der Halterungen 50 am bzw. vom Profil 20 verletzt.

In der Figur 25 links ist eine Anwendung des Montagesystems 1 gezeigt, bei dem ein Gerüstpfosten G an der Halterung befestigt ist. In der rechts dargestellten Anordnung 1 ist ein Träger T zur Befestigung von Solarmodulen am Träger T dargestellt.

Die Klammern können einfach geöffnet und an den Aluprofilen angebracht werden. Nach dem "Verriegeln" der Klammern können abhebende (Zug-)Kräfte von z.B. 200 kg oder mehr von den Klammern übertragen werden, ohne dass diese sich vom Aluprofil lösen.

Sämtliche in den einzelnen Figuren darstellten Merkmale sollen beliebig kombiniert werden können. Insgesamt bietet das Montagesystem eine sichere und zuverlässige Befestigung von Solarmodulen an einem Dach.

Sämtliche in den einzelnen Figuren darstellten Merkmale sollen beliebig kombiniert werden können. Insgesamt bietet das Montagesystem eine sichere und zuverlässige Befestigung von Solarmodulen an einem Dach.

## Patentansprüche

1. System (1) zur Befestigung eines Solarmoduls (60), umfassend:
ein Trägerelement (20) zur Befestigung am Untergrund bzw. einer Unterkonstruktion (30); und
eine Halterung (50), die am Trägerelement (20) angeordnet ist,
**dadurch gekennzeichnet, dass**
die Halterung (50) durch Formschluss mit dem Trägerelement (20) verbunden ist.

2. System (1) nach Anspruch 1,
**dadurch gekennzeichnet, dass**
das Trägerelement (20) einen Querschnitt aufweist, der wenigstens eine Hinterschneidung und/oder Vertiefung (240a, 240b) zum Hintergreifen durch eine Haltekomponente (510a, 510b) der Halterung (50) aufweist.

3. System (1) nach Anspruch 2,
**dadurch gekennzeichnet, dass**
die Halterung (50) wenigstens eine Haltekomponente (510a, 510b) aufweist, die die Hinterschneidung und/oder Vertiefung (240a, 240b) des Trägerelements (20) hintergreift.

4. System (1) nach Anspruch 3,
**dadurch gekennzeichnet, dass**
die Haltekomponente (510a, 510b) wenigstens zwei Schenkel aufweist.

5. System (1) nach Anspruch 4,
**dadurch gekennzeichnet, dass**
die Schenkel verbunden sind und die freien Enden der Schenkel elastisch auseinander biegbar ausgebildet sind.

6. System (1) nach einem der Ansprüche 3 bis 5,
**dadurch gekennzeichnet, dass**
die Haltekomponente (510a, 510b) einteilig ausgebildet ist.

7. System (1) nach einem der Ansprüche 3 bis 5,
**dadurch gekennzeichnet, dass**
die Haltekomponente (510a, 510b) zwei- oder mehrteilig ausgebildet ist.

8. System (1) nach einem der Ansprüche 3 bis 5 oder 7,
**dadurch gekennzeichnet, dass**
die Schenkel lösbar miteinander verbunden sind.

9. System (1) nach Anspruch 8,
**dadurch gekennzeichnet, dass**
die Schenkel mittels einer Schraube und/oder eines Bolzens lösbar miteinander verbunden sind.

10. System (1) nach einem der vorhergehenden Ansprüche,
**dadurch gekennzeichnet, dass**
das Trägerelement (20) wenigstens ein Fußteil (220) und ein mit dem Fußteil verbundenes Kopfteil (230) aufweist, wobei der Übergangsbereich zwischen dem Fußteil (220) und dem Kopfteil (230) verengt ausgebildet ist.

11. System (1) nach einem der vorhergehenden Ansprüche,
**dadurch gekennzeichnet, dass**
das System (1) wenigstens einen Folienabschnitt (330) aufweist, der über das Trägerelement (20) geführt ist.

12. System (1) nach einem der vorhergehenden Ansprüche 10 oder 11,
**dadurch gekennzeichnet, dass**
die Halterung (50) einen Halter (540) zur Befestigung eines Solarmoduls, einer Profilschiene und/oder eines Gleitschuhs aufweist.

13. System (1) nach einem der vorhergehenden Ansprüche 10 bis 12,
**dadurch gekennzeichnet, dass**
die Halterung (50) einen Gleitschuh (540) zur gleitenden Aufnahme eines Gleitelements aufweist.

14. System (1) nach Anspruch 13,
**dadurch gekennzeichnet, dass**
das System (1) wenigstens ein Gleitelement aufweist, das gleitend im Gleitschuh (540) gelagert ist.

15. System (1) nach Anspruch 14,
**dadurch gekennzeichnet, dass**
das Gleitelement Mittel zur Befestigung eines Solarmoduls am Gleitelement aufweist.
